# EUROPÄISCHE PATENTSCHRIFT

(11) **EP 3 573 786 B1**
(45) Veröffentlichungstag und Bekanntmachung des Hinweises auf die Patenterteilung: **25.11.2020**
(21) Anmeldenummer: 18700564.0
(22) Anmeldetag: 12.01.2018
(51) Int. Cl.: B25B 7/12, B23B 31/20, B23Q 7/04

(54) **WECHSELVORRICHTUNG FÜR SPANNKÖPFE**
CHANGER DEVICE FOR CLAMPING HEADS
DISPOSITIF DE REMPLACEMENT POUR TÊTES DE SERRAGE

(30) Priorität: 25.01.2017 DE 102017201200
(43) Veröffentlichungstag der Anmeldung: 04.12.2019
(73) Patentinhaber: Hainbuch GmbH Spannende Technik, 71672 Marbach (DE)
(72) Erfinder: HETSCHEL, Wilhelm, 74336 Brackenheim (DE)
(74) Vertreter: Patentanwaltskanzlei Cartagena
(86) Internationale Anmeldenummer: PCT/EP2018/050771
(87) Internationale Veröffentlichungsnummer: WO 2018/137946

(56) Entgegenhaltungen:
- EP-A2- 0 566 898
- WO-A1-2006/027269
- CN-A- 102 490 152
- DE-A1- 10 138 343

## Beschreibung

### ANWENDUNGSGEBIET UND STAND DER TECHNIK

Die Erfindung betrifft eine Wechselvorrichtung für Spannköpfe nach dem Oberbegriff von Anspruch 1.

Solche Spannköpfe dienen zur Aufnahme von Werkstücken während der Bearbeitung, insbesondere während einer spanenden Bearbeitung. Spannköpfe, die mittels einer gattungsgemäßen sowie einer erfindungsgemäßen Wechselvorrichtung wechselbar sein sollen, zeichnen sich durch eine Mehrzahl von Spannbacken aus, die im Zuge des Spannens aufeinander zu verlagert werden, um das zwischen ihnen angeordnete Werkstück hierdurch einzuspannen.

Die Spannköpfe werden bestimmungsgemäß in ein Spannfutter eingespannt, welches meist Teil einer im Betrieb rotierenden Spindel ist. Das Einsetzen des Spannkopfes in das Spannfutter erfolgt üblicherweise dadurch, dass die Spannbacken mittels einer Wechselvorrichtung gegeneinander kraftbeaufschlagt werden, insbesondere indem sie aufeinanderzu gedrückt werden. In diesem komprimierten Zustand sind sie dann in das Spannfutter einführbar. Sobald die Kraftbeaufschlagung der Spannbacken gegeneinander entfällt, kehren die Spannbacken in ihre radiale Ausgangsrelativlage zurück, in der sie dann üblicherweise formschlüssig gegen eine Trennung vom Spannfutter gesichert sind.

Eine Wechselvorrichtung gemäß dem Oberbegriff des Anspruchs 1, die bereits eine deutliche Verwandtschaftzur hier vorgeschlagenen Wechselvorrichtung aufweist, ist aus der WO 2006/027269 A1 bekannt. Bei dieser Wechselvorrichtung ist vorgesehen, dass mittels mehrerer Kniehebel ebenso viele Schwenkteile synchron von einem Träger angetrieben verschwenkt werden können, wobei mit den Schwenkteilen auch Stifte verschwenkt werden, die die oben beschriebene Relativverlagerung der Spannbacken bewirken. Als Antriebsmöglichkeit für den Träger schlägt die genannte Schrift ein Handrad und einen Klappgriff vor, die jeweils auf den Träger und über diesen mittelbar auf die Schwenkelemente wirken.

Die in der WO 2006/027269 A1 beschriebene Lösung hat sich grundsätzlich bewährt. Trotz ihres bereits vergleichsweise einfachen Aufbaus besteht jedoch der Bedarf nach einer nochmals weniger komplexen und herstellungstechnisch günstigeren Gestaltung.

Aufgabe der Erfindung ist es, eine gattungsgemäße Wechselvorrichtung dahingehend weiterzubilden, dass diese eine besonders preisgünstige Herstellung gestattet.

Die wird erfindungsgemäß durch eine Wechselvorrichtung mit den Merkmalen des Anspruchs 1 erzielt.

Diese Wechselvorrichtung ist zum Einsetzen eines Spannkopfes in ein Spannfutter und/oder zum Entfernen des Spannkopfes aus dem Spannfutter ausgebildet, wobei ein solcher Spannkopf eine Mehrzahl von in einer Radialrichtung gegeneinander verlagerbaren Spannbacken aufweist, die mittels der Wechselvorrichtung in Radialrichtung aufeinander zu oder voneinander weg gegeneinander kraftbeaufschlagbar sind

Die Wechselvorrichtung verfügt über eine Basis und eine Mehrzahl von Schwenkelementen, die schwenkbar an der Basis angelenkt sind und die jeweils über mindestens einen Eingriffsabschnitt zur Kraftbeaufschlagung der Spannbacken verfügen. Sie verfügt weiterhin über ein Kopplungsgetriebe, welches je Schwenkelement mindestens über eine am jeweiligen Schwenkelement schwenkbeweglich angebrachte Kopplungslasche verfügt, wobei die Schwenkelemente über die Kopplungslaschen bezüglich ihrer Bewegung gegenüber der Basis gekoppelt sind.

Die Wechselvorrichtung verfügt über einen Handgriff, der zum Zwecke der gleichzeitigen Verlagerung der Schwenkelemente gegenüber der Basis relativbeweglich ist, wobei der Handgriff hierfür ortsfest zu einer der Kopplungslaschen ausgebildet ist, so dass eine Schwenkbewegung des Handgriffs unmittelbar ein Verschwenken dieser Kopplungslasche und mittelbar das Verschwenken der mindestens einen weiteren Kopplungslasche bewirkt. hierdurch wird eine Schwenkbewegung der Schwenkelemente und der hieran vorgesehenen Eingriffsabschnitte bewirkt, was dazu führt, dass ein angekoppelter Spannkopf derart kraftbeaufschlagt und insbesondere zusammengedrückt wird, dass er in ein Spannfutter einsetzbar oder aus diesem entnehmbar ist.

Die Schwenkelemente der erfindungsgemäßen Wechselvorrichtung mit ihren Eingriffsabschnitten bilden demnach Teile der Wechselvorrichtung, die durch mittelbare manuelle Kraftbeaufschlagung ausgelenkt werden, um hierdurch die Spannbacken des Spannkopfes ebenfalls auszulenken. Es sind mindestens zwei solche Schwenkelemente da, deren Schwenkbewegung jeweils durch die am Schwenkelement angelenkte Kopplungslasche bewirkt wird.

Es stellt hierbei eine erfindungsgemäße Besonderheit dar, dass eine dieser Kopplungslaschen unmittelbar durch Verlagerung des Handgriffs gegenüber der Basis ausgelenkt wird. Der Handgriff und diese besondere Kopplungslasche sind unmittelbar und im Idealfalle sogar einstückig miteinander verbunden. Die mindestens eine andere Kopplungslasche hingegen wird lediglich mittelbar mitbewegt, da sie über das Kopplungsgetriebe unmittelbar oder mittelbar mit der unmittelbar betätigten Kopplungslasche wirkverbunden ist.

Diese genannte Besonderheit führt zu einem in der Fertigung besonders einfachen Typ einer Wechselvorrichtung. Verglichen mit der Bauweise, die aus der eingangs genannten WO 2006/027269 A1 bekannt ist, bedarf es zum einen weniger Einzelteile. Zum anderen ist auch der Montageaufwand signifikant reduziert.

Grundsätzlich ist es möglich, den Handgriff in verschiedene Richtungen erstreckt vorzusehen. So könnte er beispielsweise im Wesentlichen parallel zur Mittelachse der Wechselvorrichtung erstreckt sein.

Der Handgriff erstreckt sich jedoch vorzugweise in Radialrichtung nach außen. Diese Bauweise hat sich als die besonders ergonomische herausgestellt. Unter einer Erstreckung in Radialrichtung wird verstanden, dass jener bestimmungsgemäß von der Hand umgriffene Abschnitt des Handgriffs im unbetätigten und/oder im betätigten Zustand einen Winkel von nicht mehr als 30° mit der exakten Radialrichtung einschließt. Insbesondere ist es von Vorteil ist, wenn der Handgriff sich in Radialrichtung über eine Mittelachse der Wechselvorrichtung hinweg erstreckt, also quasi zur gegenüberliegenden Seite der Wechselvorrichtung weist.

Vorzugsweise ist ein Gegengriff vorgesehen, der gegenüber dem Handgriff derart beabstandet ist, dass beide gemeinsam von einer Hand umgriffen werden können. Auch dieser Gegengriff erstreckt sich vorzugsweise in Radialrichtung nach außen. Der Gegengriff gestattet es gemeinsam mit dem Handgriff auf besonders ergonomische Art und Weise, die Wechselvorrichtung zu betätigen und somit einen hieran angekoppelten Spannkopf zum Zwecke des Einsetzens oder Herausnehmens kraftzubeaufschlagen. Der Gegengriff ist vorzugsweise vom Handgriff derart beabstandet, dass er sowohl im betätigten als auch im unbetätigten Zustand von der Hand eines Erwachsenen gemeinsam mit dem Handgriff umgriffen werden kann. In unbetätigtem Zustand ist der Abstand zwischen dem Handgriff und dem Gegengriff bzw. den hieran jeweils vorgesehenen Bereichen zum Ergreifen der Griffe vorzugsweise um weniger als 10 cm beabstandet.

Der Handgriff und der Gegengriff sind vorzugsweise derart relativ zueinander angeordnet, dass sie durch Annäherung aneinander die Spannbacken des an der Wechselvorrichtung angekoppelten Spannkopfes radial nach innen kraftbeaufschlagen und somit den Einsetzzustand oder Entnahmezustand herstellen.

Der Gegengriff ist vorzugsweise fest an der Basis angebracht.

Die Wechselvorrichtung verfügt vorzugsweise über mindestens drei Schwenkelemente, die jeweils über mindestens einen Eingriffsabschnitt verfügen. Wenngleich bei besonderen Bauweisen zwei Schwenkelemente zum Auslenken zweier Spannbacken ausreichen können, verfügen Spannköpfe üblicherweise über drei oder vier Spannbacken. Dementsprechend sind vorzugsweise auch mindestens die genannten drei Schwenkelemente oder gar vier Schwenkelemente an der Wechselvorrichtung vorgesehen, wobei wiederum nur eines dieser Schwenkelemente über eine Schwenklasche verfügt, die unmittelbar mit dem Handgriff verbunden ist, während alle anderen Schwenkelemente mittelbar über das Kopplungsgetriebe und die jeweiligen Kopplungslaschen verlagert werden.

Für das Kopplungsgetriebe sind verschiedene Bauweisen denkbar, wobei insbesondere auch Bauweisen denkbar sind, bei denen die Kopplungslaschen der verschiedenen Schwenkelemente unmittelbar beweglich aneinander angebracht sind. Das Kopplungsgetriebe verfügt vorzugsweise jedoch übereinen insbesondere lineargeführten Kopplungsschlitten, an dem die Kopplungslaschenjeweils schwenkbeweglich angebracht sind. Dieser Kopplungsschlitten bewirkt in vorteilhafter Weise die Synchronisierung der an ihm angebrachten Kopplungslaschen. Über die eine Kopplungslasche, die unmittelbar vom Handgriff kraftbeaufschlagt wird, wird die Verlagerung des Kopplungsschlittens bewirkt, welche dann wiederum die korrespondierende Verlagerung der anderen Kopplungslaschen und damit das Verschwenken der anderen Schwenkelemente verursacht.

Die Schwenkelemente sind vorzugsweise über eine zum jeweiligen Schwenkelement und zur Basis ortsfeste Schwenkelementachse an der Basis angelenkt. Diese Bauweise ist vergleichsweise einfach, wenngleich durchaus Alternativen bestehen. So könnte beispielsweise die Schwenkbeweglichkeit der Schwenkelemente gegenüber der Basis auch durch an der Basis und am Schwenkelement schwenkbeweglich angebrachte Doppellaschen bewirkt werden, was eine flexiblere Festlegung des Schwenkwegs der Schwenkelemente ermöglichen würde. Im Lichte des Hauptfokus, eine besonders günstige Wechselvorrichtung zu schaffen, ist die unmittelbare Anbindung jedoch von Vorteil.

Die Führung des Kopplungsschlittens erfolgt vorzugsweise mittels eines Führungskanals an der Basis, in dem der Kopplungsschlitten gleitbeweglich geführt ist. Dieser Führungskanal weist weiterhin vorzugsweise eine nach innen weisende Führungswandung auf, die mindestens zwei schlitzförmige Durchbrechungen für die Kopplungslaschen aufweist. Der genannte Führungskanal ist vorzugsweise zentrisch in der Basis vorgesehen und kann als nur einseitig offener Führungskanal oder durchgängiger Führungskanal ausgebildet sein. Der Kopplungsschlitten ist hierin geführt, wobei es nicht auf eine besonders genaue oder enge Führung ankommt, da üblicherweise eine perfekte Synchronisierung zwischen den am Kopplungsschlitten angebrachten Kopplungslaschen nicht erforderlich ist.

Die in der nach innen weisenden Führungswand vorzugsweise vorgesehenen schlitzförmigen Durchbrechungen sind vorzugsweise derart an die Kopplungslaschen und deren Breite angepasst, dass hier nur wenig Spiel verbleibt. Dies ist insbesondere im Bereich jener Kopplungslasche von Vorteil, die unmittelbar durch den Handgriff kraftbeaufschlagt wird, um hierein Verkanten oder dergleichen zu vermeiden und den Handgriff sauber zu führen.

Die Eingriffsabschnitte sind vorzugsweise als stiftförmige Fortsätze an einem unteren Ende der Schwenkelemente vorgesehen, wobei vorzugsweise jeweils mindestens zwei stiftförmige Fortsätze an jedem der Schwenkelemente vorgesehen sind.

### KURZBESCHREIBUNG DER ZEICHNUNGEN

Weitere Vorteile und Aspekte der Erfindung ergeben sich aus den Ansprüchen und aus der nachfolgenden Beschreibung eines bevorzugten Ausführungsbeispiels der Erfindung, das nachfolgend anhand der Figuren erläutert ist.
Fig. 1 zeigt eine erfindungsgemäße Wechselvorrichtung zusammen mit einem hiermit handhabbaren Spannkopf, der bestimmungsgemäß im Betrieb in ein Spannfutter eingesetzt ist.
Fig. 2 zeigt die Wechselvorrichtung nach Fig. 1 in einer Darstellung von unten sowie den Spannkopf von oben, so dass die Art des Zusammenwirkens deutlich wird.
Fig. 3A und 3B zeigen die Wechselvorrichtung in geschnittener Darstellung im nicht betätigten Zustand und in dem zum Zwecke eines Wechselvorgangs betätigten Zustand.

### DETAILLIERTE BESCHREIBUNG DES AUSFÜHRUNGSBEISPIELS

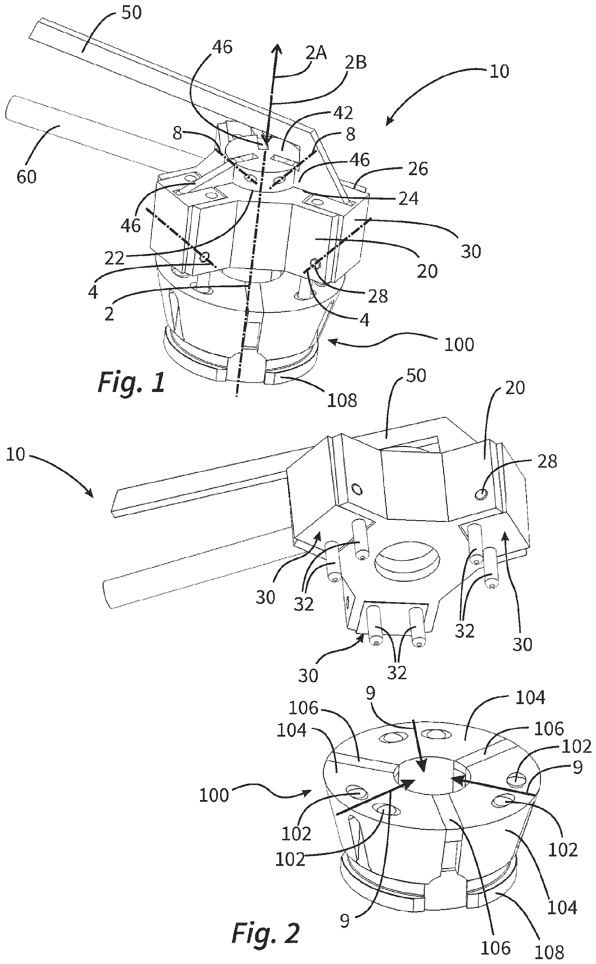

Fig. 1 zeigt eine erfindungsgemäße Wechselvorrichtung 10 mitsamt dem bestimmungsgemäß mit dieser Wechselvorrichtung zu manipulierenden Spannkopf 100. Die Wechselvorrichtung 10 verfügt über eine Basis 20, die gleichsam den Hauptbestandteil der Wechselvorrichtung 10 ausmacht. Diese Basis 20 verfügt über drei gegenüber einer Mittelachse 2 radial erstreckte Ausleger, die voneinander um jeweils 120° beabstandet sind. An jedem dieser Ausleger ist eine radial nach außen offene Ausnehmung 26 vorgesehen, in der ein Schwenkelement 30 angeordnet ist. Zentrisch verfügt die Basis 20 über einen Führungskanal 22, in welchem ein Kopplungsschlitten 42 als zentrales Element eines Kopplungsgetriebes 40 angeordnet ist.

Die Schwenkelemente 30 sind jeweils mittels Stiften 28 schwenkbeweglich um Schwenkelementachsen 4 an der Basis 20 angelenkt. Der Kopplungsschlitten 42 ist in Richtung der Pfeile 2A und 2B entlang der Mittelachse gegenüber der Basis 20 linear beweglich. Miteinander verbunden sind der Kopplungsschlitten 42 und die Schwenkelemente 30 über Kopplungslaschen 46, die um Schwenkachsen 6 schwenkbar an den Schwenkelementen 30 und um Schwenkachsen 8 schwenkbar am Kopplungsschlitten 42 angelenkt sind. Diese Grundkonstellation führt dazu, dass eine lineare Verlagerung des Kopplungsschlittens 42 gegenüber der Basis 20 ein gemeinsames Verschwenken der Kopplungslaschen 46 und damit ebenfalls ein gemeinsames Verschwenken der Schwenkelemente 30 bewirkt. Um diese Schwenkbewegung der Kopplungslaschen 46 zu verursachen, ist eine der Kopplungslaschen 46 unmittelbar mit einem Handgriff 50 verbunden, der gegenüber einem basisfesten Gegengriff 60 verschwenkbar ist, um hierdurch alle drei Schwenkelemente 30 gemeinsam schwenken zu können.

Wie anhand der Fig. 2 ersichtlich ist, sind an der Unterseite der Schwenkelemente 30 jeweils Eingriffsabschnitte 32 in Stiftform vorgesehen. Diese Eingriffsabschnitte 32 sind korrespondierend zu Bohrungen 102 in den Spannbacken 104 des Spannkopfes 100 paarweise angeordnet. Die Spannbacken 104 sind miteinander durch Verbindungsabschnitte 106 aus einem elastischen Material verbunden, so dass sie gegen eine hierdurch verursachte Federkraft in Radialrichtung 9 zusammengedrückt werden können. Im zusammengedrückten Zustand sind dann die an den Spannbacken 104 vorgesehenen Haltestege 108 ebenfalls ausreichend weit zusammengedrückt, damit dann ein Einsetzen bzw. Herausnehmen des Spannkopfes 100 aus einem nicht dargestellten Spannfutter möglich ist.

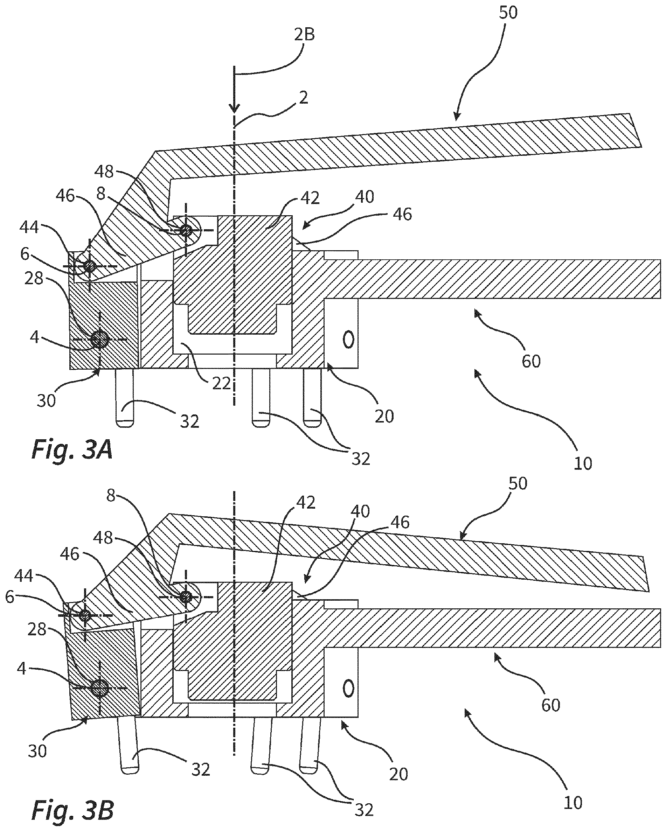

Bezug nehmend auf die Fig. 3A und 3B wird das Zusammenwirken nochmals erläutert. Diese Figuren zeigen einen Schnitt durch die Wechselvorrichtung 10 entlang der Erstreckungsrichtung des Handgriffs 50 und des Gegengriffs 60. Es sei klarstellend erwähnt, dass die Schnitte um 120° bzw. 240° um die Mittelachse gedreht mit Ausnahme der Anordnung des Handgriffs 50 und des Gegengriffs 60 identisch aussähen.

Fig. 3A zeigt den unbetätigten Zustand der Wechselvorrichtung 10. Werden nun der Handgriff 50 und der Gegengriff 60 gemeinsam durch die Hand des Bedieners ergriffen und aufeinander zugedrückt, so führt dies zu einem Verschwenken der in Fig. 3A geschnittenen Kopplungslasche 46.

Die Kopplungslasche 46 ist am entlang der Mittelachse 2 linearbeweglichen Kopplungsschlitten 42 um die Schwenkachse 8 schwenkbeweglich angebracht. Diese wird durch einen Stift 48 definiert, der in Bohrungen der Kopplungslasche 46 und des Kopplungsschlittens 42 aufgenommen ist.

Die Kopplungslasche 46 ist weiterhin am Schwenkelement 30 um die Schwenkachse 6 schwenkbeweglich angebracht. Diese wird durch einen Stift 44 in Bohrungen des Schwenkelements 30 und der Kopplungslasche 46 definiert. Das Schwenkelement30 selbst ist um die Schwenkelementachse 4 an der Basis schwenkbar angebracht.

Das Verschwenken der Kopplungslasche führt aufgrund dieser Anbindungen zu einer Verlagerung des Kopplungsschlittens 42 in Richtung des Pfeils 2B nach unten sowie zu einem Verschwenken der Eingriffsabschnitte 32 des Schwenkelements 30 radial nach innen. Über den Kopplungsschlitten 42 werden auch die beiden anderen Kopplungslaschen 46 in in etwa gleichem Maße wie die am Handgriff 50 befestigte Kopplungslasche 46 verschwenkt, so dass auch die beiden nur mittelbar mitbewegten Schwenkelemente 30 verschwenken und ihre jeweiligen Eingriffsabschnitte 32 radial nach innen verlagert werden.

Bezogen auf die Fig. 2 führt dies bei angekoppeltem Spannkopf 100 dazu, dass im Bereich des Haltestegs 108 der Außendurchmesser sinkt und der Spannkopf 100 somit aus dem Spannfutter entnommen werden kann oder in dieses eingesetzt werden kann.

## Patentansprüche

1. Wechselvorrichtung (10) für Spannköpfe (100) mit den folgenden Merkmalen:
a. die Wechselvorrichtung (10) ist zum Einsetzen eines Spannkopfes (100) in ein Spannfutter und/oder zum Entfernen des Spannkopfes (100) aus dem Spannfutter ausgebildet, wobei der Spannkopf (100) eine Mehrzahl von in einer Radialrichtung (9) gegeneinander verlagerbaren Spannbacken (104) aufweist, die mittels der Wechselvorrichtung (10) in Radialrichtung aufeinander zu oder voneinander weg gegeneinander kraftbeaufschlagbar sind, und
b. die Wechselvorrichtung (10) verfügt über eine Basis (20), und
c. die Wechselvorrichtung (10) verfügt über eine Mehrzahl von Schwenkelementen (30), die schwenkbar an der Basis (20) angelenkt sind und die jeweils über mindestens einen Eingriffsabschnitt (32) zur Kraftbeaufschlagung der Spannbacken (104) verfügen, und
d. die Wechselvorrichtung (10) verfügt über ein Kopplungsgetriebe (40), welches je Schwenkelement (30) mindestens über eine am jeweiligen Schwenkelement (30) schwenkbeweglich angebrachte Kopplungslasche (46) verfügt, wobei die Schwenkelemente (30) über die Kopplungslaschen (46) bezüglich ihrer Bewegung gegenüber der Basis (20) gekoppelt sind, und
e. die Wechselvorrichtung (10) verfügt über einen Handgriff (50), der zum Zwecke der gleichzeitigen Verlagerung der Schwenkelemente (30) gegenüber der Basis (20) relativbeweglich ist,
**gekennzeichnet durch** das folgende Merkmal:
f. der Handgriff (50) ist ortsfest zu einer der Kopplungslaschen (46) ausgebildet, so dass eine Schwenkbewegung des Handgriffs (50) unmittelbar ein Verschwenken dieser Kopplungslasche (46) und mittelbar das Verschwenken der mindestens einen weiteren Kopplungslasche (46) bewirkt, so dass hierdurch eine Schwenkbewegung der Schwenkelemente (30) und der hieran vorgesehenen Eingriffsabschnitte (32) bewirkt wird.

2. Wechselvorrichtung nach Anspruch 1 mit dem folgenden zusätzlichen Merkmal:
a. der Handgriff (50) erstreckt sich in Radialrichtung nach außen.

3. Wechselvorrichtung nach Anspruch 2 mit dem folgenden zusätzlichen Merkmal:
a. der Handgriff (50) erstreckt sich in Radialrichtung über eine Mittelachse (2) der Wechselvorrichtung (10).

4. Wechselvorrichtung nach einem der vorstehenden Ansprüche mit dem folgenden zusätzlichen Merkmal:
a. es ist ein Gegengriff (60) vorgesehen, der gegenüber dem Handgriff (50) derart beabstandet ist, dass beide gemeinsam von einer Hand umgriffen werden können.

5. Wechselvorrichtung nach Anspruch 4 mit mindestens einem derfolgenden zusätzlichen Merkmale:
a. der Gegengriff (60) erstreckt sich in Radialrichtung nach außen, und/oder
b. der Gegengriff ist fest an der Basis (20) angebracht.

6. Wechselvorrichtung nach einem der vorstehenden Ansprüche mit dem folgenden zusätzlichen Merkmal:
a. die Wechselvorrichtung (10) verfügt über mindestens drei Schwenkelemente (30), die jeweils über mindestens einen Eingriffsabschnitt (32) verfügen.

7. Wechselvorrichtung nach einem der vorstehenden Ansprüche mit dem folgenden zusätzlichen Merkmal:
a. das Kopplungsgetriebe (40) verfügt über einen linear geführten Kopplungsschlitten (42), an dem die Kopplungslaschen (46) schwenkbeweglich angebracht sind.

8. Wechselvorrichtung nach einem der vorstehenden Ansprüche mit dem folgenden zusätzlichen Merkmal:
a. die Schwenkelemente (30) sind über eine zum jeweiligen Schwenkelement (30) und zur Basis (20) ortsfeste Schwenkelementachse (4) an der Basis (20) angelenkt.

9. Wechselvorrichtung nach Anspruch 7 mit dem folgenden zusätzlichen Merkmal:
a. die Führung des Kopplungsschlittens (42) erfolgt mittels eines Führungskanals (22) an der Basis (20), in dem der Kopplungsschlitten (42) gleitbeweglich geführt ist.

10. Wechselvorrichtung nach Anspruch 9 mit dem folgenden zusätzlichen Merkmal:
a. der Führungskanal (22) weist eine nach innen weisende Führungswandung auf, die mindestenszwei schlitzförmige Durchbrechungen (24) für die Kopplungslaschen (46) aufweist.

11. Wechselvorrichtung nach einem der vorstehenden Ansprüche mit dem folgenden zusätzlichen Merkmal:
a. die Eingriffsabschnitte (32) sind als stiftförmige Fortsätze an einem unteren Ende der Schwenkelemente (30) vorgesehen, wobei vorzugsweise jeweils mindestens zwei stiftförmige Fortsätze an jedem der Schwenkelemente (30) vorgesehen sind.

## Claims

1. Changer device (10) for clamping heads (100), having the following features:
a. the changer device (10) is configured for inserting a clamping head (100) into a chuck and/or for removing the clamping head (100) from the chuck, wherein the clamping head (100) has a plurality of clamping jaws (104) which in a radial direction (9) are mutually repositionable and which by means of the changer device (10) in the radial direction in a mutually converging or mutually diverging manner are impingable with a force, and
b. the changer device (10) possesses a base (20), and
c. the changer device (10) possesses a plurality of pivoting elements (30) which are articulated so as to be pivotable on the base (20) and which in each case possess at least one engagement portion (32) for impinging the clamping jaws (104) with a force, and
d. the changer device (10) possesses a coupling gearbox (40) which per pivoting element (30) possesses at least one coupling tab (46) which is attached so as to be pivotably movable on the respective pivoting element (30), wherein the pivoting elements (30) in terms of the movement thereof in relation to the base (20) are coupled by way of the coupling tabs (46), and
e. the changer device (10) possesses a handle (50) which for the purpose of the simultaneous repositioning of the pivoting elements (30) is movable in relation to the base (20) in a relative manner, **characterized by** the following feature:
f. the handle (50) is configured so as to be locationally fixed in relation to one of the coupling tabs (46) such that a pivoting movement of the handle (50) directly causes pivoting of said coupling tab (46) and indirectly causes the pivoting of the at least one further coupling tab (46) such that, on account thereof, a pivoting movement of the pivoting elements (30) and of the engagement portions (32) provided thereon is caused.

2. Changer device according to Claim 1, having the following additional feature:
a. the handle (50) extends outward in the radial direction.

3. Changer device according to Claim 2, having the following additional feature:
a. the handle (50) extends beyond a central axis (2) of the changer device (10) in the radial direction.

4. Changer device according to one of the preceding claims, having the following additional feature:
a. a counter handle (60) which in relation to the handle (50) is spaced apart in such a manner that both handles (50, 60) can conjointly be encompassed by one hand is provided.

5. Changer device according to Claim 4, having at least one of the following additional features:
a. the counter handle (60) extends outward in the radial direction, and/or
b. the counter handle is fixedly attached to the base (20) .

6. Changer device according to one of the preceding claims, having the following additional feature:
a. the changer device (10) possesses at least three pivoting elements (30) which possess in each case at least one engagement portion (32).

7. Changer device according to one of the preceding claims, having the following additional feature:
a. the coupling gearbox (40) possesses a coupling slide (42) which is guided in a linear manner and to which the coupling tabs (46) are attached so as to be pivotably movable.

8. Changer device according to one of the preceding claims, having the following additional feature:
a. the pivoting elements (30) are articulated on the base (20) by way of a pivoting element axis (4) which is locationally fixed in relation to the respective pivoting element (30) and to the base (20) .

9. Changer device according to Claim 7, having the following additional feature:
a. the guiding of the coupling slide (42) is performed by means of a guide duct (22) on the base (20), the coupling slide (42) being guided so as to be movable in a sliding manner in said guide duct (22) .

10. Changer device according to Claim 9, having the following additional feature:
a. the guide duct (22) has an inward-pointing guide wall which has at least two slot-shaped through holes (24) for the coupling tabs (46).

11. Changer device according to one of the preceding claims, having the following additional feature:
a. the engagement portions (32) are provided as pin-shaped appendages on a lower end of the pivoting elements (30), wherein at least two pin-shaped appendages are preferably in each case provided on each of the pivoting elements (30).

## Revendications

1. Dispositif de remplacement (10) pour têtes de serrage (100), présentant les caractéristiques suivantes :
a. le dispositif de serrage (10) est réalisé pour l'insertion d'une tête de serrage (100) dans un mandrin de serrage et/ou pour le retrait de la tête de serrage (100) du mandrin de serrage, dans lequel la tête de serrage (100) comprend une pluralité de mâchoires de serrage (104) déplaçables les unes par rapport aux autres dans une direction radiale (9), lesquelles peuvent être soumises à une force les unes par rapport aux autres de manière à se rapprocher les unes des autres ou de manière à s'éloigner les unes des autres dans la direction radiale au moyen du dispositif de remplacement (10), et
b. le dispositif de remplacement (10) comporte une base (20), et
c. le dispositif de remplacement (10) comporte une pluralité d'éléments pivotants (30), qui sont articulés de manière pivotante sur la base (20) et qui comportent respectivement au moins une partie d'entrée en prise (32) pour soumettre les mâchoires de serrage (104) à une force, et
d. le dispositif de remplacement (10) comporte une transmission d'accouplement (40), laquelle comporte, pour chaque élément pivotant (30), au moins une languette d'accouplement (46) montée de manière mobile en pivotement sur l'élément pivotant (30) respectif, dans lequel les éléments pivotants (30) sont accouplés en termes de mouvement par rapport à la base (20) par le biais des languettes d'accouplement (46), et
e. le dispositif de remplacement (10) comporte une poignée (50), qui est mobile relativement à des fins de déplacement simultané des éléments pivotants (30) par rapport à la base (20),
**caractérisé par** la caractéristique suivante :
f. la poignée (50) est réalisée de manière fixe par rapport à l'une des languettes d'accouplement (46), de telle sorte qu'un mouvement de pivotement de la poignée (50) provoque directement un pivotement de cette languette d'accouplement (46) et indirectement le pivotement de l'au moins une autre languette d'accouplement (46), de sorte qu'un mouvement de pivotement des éléments pivotants (30) et des parties d'entrée en prise (32) prévues sur ceux-ci soit ainsi provoqué.

2. Dispositif de remplacement selon la revendication 1, présentant la caractéristique supplémentaire suivante :
a. la poignée (50) s'étend vers l'extérieur dans la direction radiale.

3. Dispositif de remplacement selon la revendication 2, présentant la caractéristique supplémentaire suivante :
a. la poignée (50) s'étend au-delà d'un axe médian (2) du dispositif de remplacement (10) dans la direction radiale.

4. Dispositif de remplacement selon l'une des revendications précédentes, présentant la caractéristique supplémentaire suivante :
a. il est prévu une poignée conjuguée (60), qui est espacée par rapport à la poignée (50) de telle sorte que les deux peuvent être entourées conjointement par une main.

5. Dispositif de remplacement selon la revendication 4, présentant au moins l'une des caractéristiques supplémentaires suivantes :
a. la poignée conjuguée (60) s'étend vers l'extérieur dans la direction radiale, et/ou
b. la poignée conjuguée est montée fixement sur la base (20) .

6. Dispositif de remplacement selon l'une des revendications précédentes, présentant la caractéristique supplémentaire suivante :
a. le dispositif de remplacement (10) comporte au moins trois éléments pivotants (30), qui comportent respectivement au moins une partie d'entrée en prise (32).

7. Dispositif de remplacement selon l'une des revendications précédentes, présentant la caractéristique supplémentaire suivante :
a. la transmission d'accouplement (40) comporte un chariot d'accouplement (42) guidé linéairement, chariot sur lequel sont montées les languettes d'accouplement (46) de manière mobile en pivotement.

8. Dispositif de remplacement selon l'une des revendications précédentes, présentant la caractéristique supplémentaire suivante :
a. les éléments pivotants (30) sont articulés sur la base (20) par le biais d'un axe d'élément pivotant (4) fixe par rapport à l'élément pivotant (30) respectif et par rapport à la base (20).

9. Dispositif de remplacement selon la revendication 7, présentant la caractéristique supplémentaire suivante :
a. le guidage du chariot d'accouplement (42) s'effectue au moyen d'un canal de guidage (22) sur la base (20), canal dans lequel le chariot d'accouplement (42) est guidé de manière mobile en coulissement.

10. Dispositif de remplacement selon la revendication 9, présentant la caractéristique supplémentaire suivante :
a. le canal de guidage (22) comprend une paroi de guidage tournée vers l'intérieur, laquelle comprend au moins deux ouvertures (24) en forme de fentes pour les languettes d'accouplement (46).

11. Dispositif de remplacement selon l'une des revendications précédentes, présentant la caractéristique supplémentaire suivante :
a. les parties d'entrée en prise (32) sont prévues en tant que saillies en forme de goupilles sur une extrémité inférieure des éléments pivotants (30), dans lequel de préférence respectivement au moins deux saillies en forme de goupilles sont prévues sur chacun des éléments pivotants (30).
